# FASCICULE DE BREVET EUROPEEN

(11) **EP 1 544 106 B1**
(45) Date de publication et mention de la délivrance du brevet: **05.07.2006**
(21) Numéro de dépôt: 04106283.7
(22) Date de dépôt: 03.12.2004
(51) Int. Cl.: B64D 27/00

(54) **Drain notamment pour mât support de réacteur**
Ablass insbesondere für Triebwerksgondelaufhängung
Drain in particular for engine pylon support

(30) Priorité: 18.12.2003 FR 0314891
(43) Date de publication de la demande: 22.06.2005
(73) Titulaire: AIRBUS France, 31060 Toulouse (FR)
(72) Inventeur: Bonnaud, Cyril, F-31200 Toulouse (FR)
(74) Mandataire: Schmit, Christian Norbert Marie

(56) Documents cités:
- FR-A- 2 735 444
- FR-A- 2 741 321

## Description

La présente invention a trait aux drains installés sur les carénages de mât arrière et destinés à évacuer les éventuelles fuites de liquides pouvant être inflammables et provenant de réservoirs, canalisations ou systèmes hydrauliques se trouvant au dessus dudit carénage arrière dans une structure intégrée au mât réacteur et dénommé plus couramment « rear secondary structure (RSS) ».

Ces drains sont des conduits de section généralement elliptique non négligeable pouvant atteindre par exemple une dimension de 1 50 mm X 58 mm pour les plus gros aéronefs, qui font saillie à l'arrière du carénage arrière du mât réacteur et génèrent une traînée qui a une incidence sur la consommation de carburant.

Un autre inconvénient de ces drains est celui de leur insuffisance en terme de capacité de réglage du niveau d'aspiration. La géométrie de ces drains ne permet en effet d'accéder qu'à un seul niveau d'aspiration.

Un autre problème posé par ces drains du fait de leur taille est le risque d'introduction ou d'installation d'un volatile qui pourrait obstruer le conduit.

La présente invention vise à pallier ces divers inconvénients en proposant une nouvelle géométrie pour ce type de drain.

A cet effet, l'invention a pour objet un drain notamment pour mât support de réacteur d'aéronef, agencé sur le bord de fuite de la structure secondaire arrière dudit mât, caractérisé en ce qu'il est constitué :
- d'un conduit d'axe sensiblement horizontal,
- de section générale sensiblement rectangulaire, prise dans un plan parallèle audit bord de fuite,
- fermé à son extrémité externe par une partie terminale de section sensiblement ogivale prise dans l'axe du conduit,
- et comportant au moins une ouverture de drainage de forme allongée sur au moins l'une des parois latérales opposées.

Suivant des modes de réalisation, ledit conduit peut être symétrique par rapport au plan vertical contenant ledit bord de fuite, comporter une ouverture de drainage sur ses deux parois latérales opposées, dont le grand axe est parallèle au bord de fuite et ces deux ouvertures peuvent être symétriques.

Un tel drain forme un conduit aplati muni sur ses flancs latéraux, sensiblement plans, d'ouvertures allongées en forme d'ouies assurant un drainage plus efficace grâce à la formation, en sortie d'ouies, de zones de dépression plus importante que celles générées à la sortie des drains traditionnels, le drain selon l'invention générant par ailleurs une traînée sensiblement réduite en comparaison avec les mêmes drains traditionnels de capacité de drainage équivalente.

Les ouies d'un tel drain peuvent avoir, en comparaison avec un drain conventionnel à section elliptique de drainage de 4900 mm², de 120 mm de grand axe et 52 mm de petit et à capacité de drainage équivalente, une forme générale rectangulaire de 230 mm de longueur sur 11 mm de largeur, ce qui, par ailleurs, est de nature à interdire toute intrusion de volatiles notamment.

D'autres caractéristiques et avantages ressortiront de la description qui va suivre d'un mode de réalisation du dispositif de l'invention, description donnée à titre d'exemple uniquement et en regard des dessins annexés sur lesquels :
- Figure 1 est une vue en perspective de l'arrière d'un mât réacteur ;
- Figure 2 est une vue partielle agrandie montrant plus en détail le drain de la partie dénommée « rear secondary structure RSS » de mât ;
- Figure 3 est une vue de côté du drain de la figure 2 ;
- Figure 4 est une vue analogue à la figure 2 représentant un drain selon l'invention au lieu et place du drain conventionnel ;
- Figure 5 est une vue de côté schématique du drain de la figure 4 ;
- Figure 6 est une vue en coupe suivant la ligne VII-VII du drain de la figure 5 ;
- Figure 7 est une vue schématique en coupe suivant la ligne VII-VII du drain de la figure 5 ;
- Figure 8 est une vue comparative entre les sections d'un drain selon l'invention et d'un drain conventionnel à section elliptique ;
- Figure 9 est un schéma illustrant l'écoulement aérodynamique à hauteur d'une ouie du drain de l'invention, et
- Figure 10 est une vue schématique montrant l'implantation du drain sur la structure RSS ;

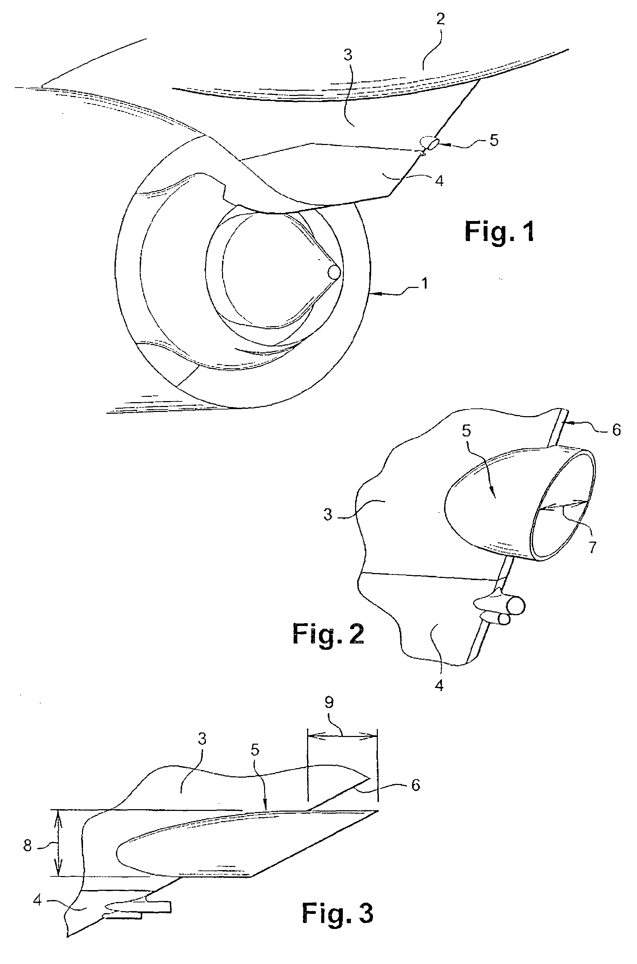

Sur la figure 1 on a représenté schématiquement en 1 un réacteur d'aéronef, en 2 le mât support du réacteur, dénommé mât réacteur, en 3 la structure dénommée RSS ou « rear secondary structure », c'est-à-dire structure secondaire arrière et en 4 le carénage de mât arrière situé à proximité immédiate de l'arrière du réacteur 1.

Dans la structure RSS sont traditionnellement installés divers systèmes en équipement tels qu'extincteurs, réservoirs et canalisations de fluides hydrauliques, susceptibles de fuite de liquide, par suite par exemple de déjointement de tuyauteries. C'est la raison pour laquelle un drain 5 est disposé à la partie inférieure de la zone RSS, sur le bord de fuite 6 de cette dernière.

Traditionnellement ce drain 5, disposé à cheval sur le bord de fuite 6, a une section elliptique, le petit axe 7 (figure 2) étant horizontal et orthogonal au bord de fuite 6.

Le drain 5 a son axe longitudinal légèrement relevé (de l'ordre de 7°) au dessus de l'axe de l'écoulement aérodynamique en vol. En 8 sur la figure 3 est indiqué le grand axe de la section elliptique du drain dont la sortie est en biseau, le plan de sortie étant parallèle au bord de fuite 6. Le drain 5 fait saillie à l'arrière du bord de fuite d'une distance 9 de l'ordre de 120 mm pour un drain 5 de 126 mm de grand axe 8 et de 58 mm de petit axe 7, les dimensions d'axes étant prises extérieurement au conduit formant le drain dont l'épaisseur de paroi est de l'ordre de 3 mm.

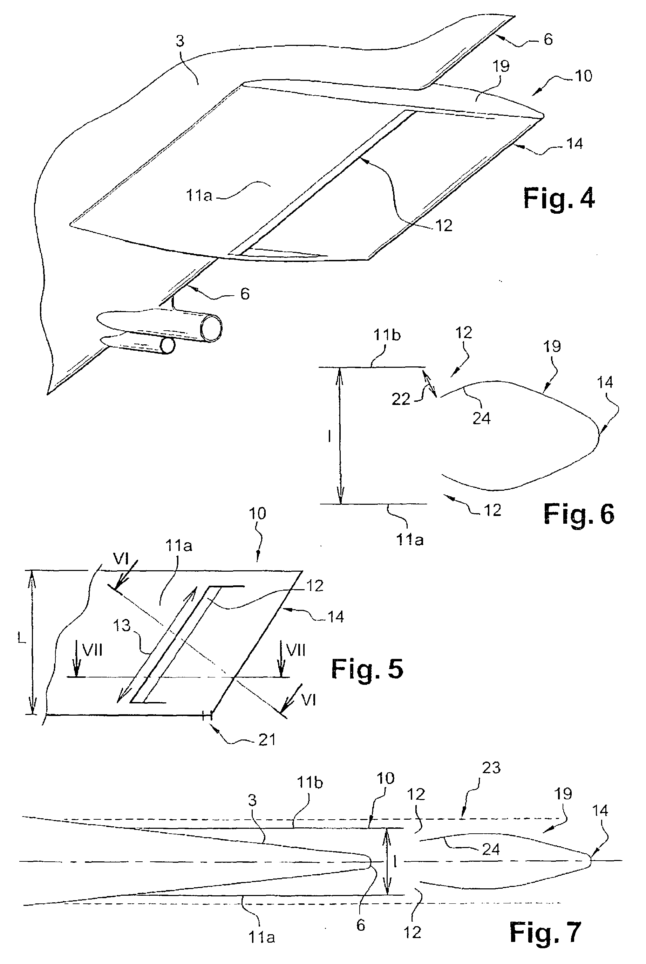

La figure 4 illustre un mode de réalisation d'un drain 10 selon l'invention, en substitution du drain 5, constitué d'un conduit aplati sur ses flancs. Pour mieux comprendre la forme du drain 10 on se reportera également aux figures 5 à 8.

La figure 5 est une vue en élévation latérale du drain 10 faisant apparaître sur un flanc latéral 11a sensiblement plan du drain une ouverture inclinée en forme d'ouie 12 de section générale rectangulaire étroite et plus précisément en forme de parallélogramme et de grand axe 13 parallèle au bord de fuite 6 de la structure 3, le propre bord de fuite 14 du drain 10 étant également de préférence parallèle au bord 6.

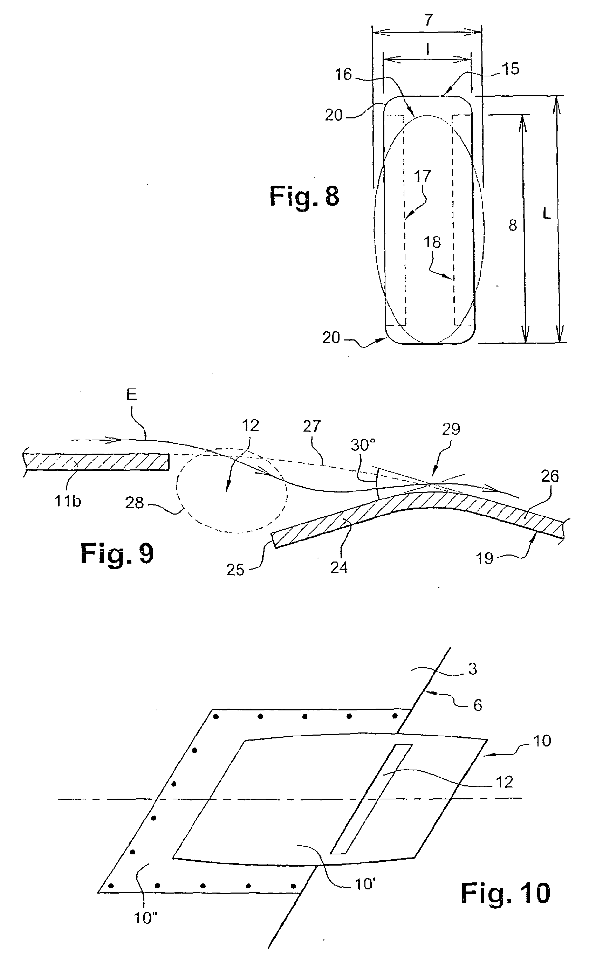

La figure 8 montre en comparaison les sections respectives du drain 10 selon l'invention et du drain 5, prises perpendiculairement à leur axe. On observe que la section 15 du drain 10 est rectangulaire à angles arrondis à des fins aérodynamiques et présente une longueur L légèrement supérieure au grand axe (8) de la section elliptique 16 du drain 5, cependant que la largeur I de la section 15 est légèrement inférieure au petit axe (7).

Sur la figure 8 les lignes en tiretés 17 et 18 symbolisent les deux ouies 12 ménagées sur les deux flancs opposés parallèles 11a et 11b du drain 10.

Sur la figure 7 qui est une coupe parallèle à l'axe du drain 10, on observe que ce dernier est symétrique par rapport au plan vertical contenant les bords de fuite 6 et 14 et que le conduit formant le drain se termine par une partie 19 à section en ogive également à des fins aérodynamiques.

Sur la figure 5 on notera que les ouies 12 ne s'étendent pas jusqu'aux bords supérieur et inférieur du drain 10 et s'arrêtent (figure 8) au commencement des zones arrondies 20 des angles du drain. Il subsiste donc une petite zone inférieure du drain qui ne serait pas drainée, aussi, pour y pallier, un trou pourra être ménagé dans la paroi du fond du drain 10, au voisinage du bord de fuite 14, comme symbolisé en 21 sur la figure 5.

En 22 sur la figure 6 est indiquée la largeur des ouies 12, prise entre un rebord du flanc 11b et le rebord de la partie terminale 19. A titre d'exemple, la largeur 22 des ouies 12 est de l'ordre de 11 mm pour une longueur 13 (figure 5) de l'ordre de 238 mm,

En 23 sur la figure 7 est symbolisé le contour du drain 5 légèrement plus large que le drain 10.

Sur la figure 9, on a illustré l'écoulement aérodynamique au droit d'une ouie 12 du drain 10. La paroi 24 de la partie terminale 19, délimitant l'ouie 12 par son bord 25 est en léger retour vers l'intérieur du drain, par rapport à la partie adjacente 26 intermédiaire entre la partie 24 et le nez de l'ogive (14), laquelle partie 26 est dans la courbure (tiretés 27) du flanc 11b du drain.

En 28 se crée une zone de dépression maximale infléchissant d'un angle de quelques degrés le flux d'écoulement rasant E vers l'intérieur du drain à hauteur de l'ouie 12.

Le flux E est ensuite repris par la face externe de la paroi 24 et accéléré en 29. Le rôle de la paroi 24 est de reprendre ce flux pour éviter qu'il ne pénètre dans le drain.

L'angle formé entre la tangente à la paroi 26 et la face externe de la paroi 24 est de l'ordre de 30°.

Des essais ont montré que dans les zones (28) des ouies 12 se créaient des dépressions correspondant à des coefficients de pression négatifs Kₚ de l'ordre de - 0,34 en comparaison avec des dépressions à coefficient Kₚ de - 0,19 en sortie de drain conventionnel 5 de même capacité de drainage, les drains testés ayant des profils identiques à ceux de la figure 8.

Les figures 10 illustrent un mode de réalisation pratique du drain 10 selon lequel la partie drain proprement dite 10' est prolongée dans sa partie d'encastrement dans l' « étrave » constituée par le bord de fuite 6 de la structure 3, de deux parties symétriques 10" destinées à venir à affleurement avec les parois des deux flancs de la structure 3, l' « étrave » de cette dernière étant découpée en conséquence pour recevoir l'ensemble 10'-10".

D'une manière générale les ouies 12 sont parallèles au bord de fuite 6 et au voisinage immédiat de ce bord, et de part et d'autre.

Les dimensions et la forme des ouies 12 peuvent bien entendu varier en fonction par exemple de la capacité de drainage désirée.

Dans le mode de réalisation décrit, le rapport entre la longueur (13) et la largeur (22) de chaque ouie 12 est de vingt, mais il pourrait être différent suivant les applications, notamment en fonction de la capacité de drainage désirée, la section de passage des ouies étant fonction de cette capacité. La largeur 22 doit rester de l'ordre de 10 à 20 mm pour éviter l'intrusion de volatiles.

D'une manière générale, la section de passage cumulée des deux ouies 12 sera légèrement supérieure à la section interne du conduit du drain 10 en amont des ouies.

La forme de la section externe du drain représentée avec un contour rectangulaire 15 sur la figure 8 peut aussi varier, étant entendu que la largeur I sera légèrement inférieure au petit axe du drain à section elliptique de capacité de drainage équivalente, le rapport de la longueur L de la section 15 sur la largeur I étant de préférence de l'ordre de 2,8 comme illustré dans l'exemple de la figure 8, ce rapport pouvant évoluer dans la plage 1-10.

Les flancs 11a, 11b du drain 10 sont de préférence plats mais pourraient être éventuellement légèrement convexes.

Outre la capacité d'aspiration d'un tel drain 10, sensiblement supérieure à celle d'un drain 5 conventionnel non seulement en vol mais également au roulage au sol, le comportement aérodynamique du drain 10 en vol est très favorable en comparaison avec celui du drain 5. En effet, la traînée engendrée est significativement réduite du fait notamment de la création de la zone d'aspiration sur les flancs du drain, au droit des ouies 12, et non au droit du nez arrière (19) du drain qui est profilé, alors que dans le drain conventionnel 5, l'aspiration est créée derrière le drain, la dépression ainsi formée en aval participant directement et plus amplement à la création d'une traînée.

A titre d'exemple et pour le mode de réalisation décrit, le drain 10 fait saillie sur le bord de fuite 6, axialement à l'écoulement aérodynamique, d'une distance de l'ordre de 120 mm équivalente à celle (9) du drain 5.

## Revendications

1. Drain notamment pour mât (3) support de réacteur d'aéronef, agencé sur le bord de fuite (6) de la structure secondaire arrière (3) dudit mât, **caractérisé en ce qu'**il est constitué :
- d'un conduit (10) d'axe sensiblement horizontal,
- de section générale (15) sensiblement rectangulaire, prise dans un plan parallèle audit bord de fuite (6),
- fermé à son extrémité externe par une partie terminale (19) de section sensiblement ogivale prise dans l'axe du conduit,
- et comportant au moins une ouverture de drainage (12) de forme allongée sur au moins l'une des parois latérales opposées (11a, 11b).

2. Drain suivant la revendication 1, **caractérisé en ce que** ledit conduit (10) est symétrique par rapport au plan vertical contenant ledit bord de fuite (6).

3. Drain suivant la revendication 1 ou 2, **caractérisé en ce que** ledit conduit (10) comporte sur ses deux parois latérales opposées (11a, 11b) deux ouvertures de drainage (12), de forme allongée, dont le grand axe (13) est parallèle au bord de fuite (6).

4. Drain suivant la revendication 3, **caractérisé en ce que** lesdites ouvertures de drainage (12) sont symétriques.

5. Drain suivant l'une des revendications 1 à 4, **caractérisé en ce que** lesdites ouvertures de drainage (12) sont disposées sensiblement à hauteur dudit bord de fuite (6) de la structure secondaire arrière (3), en amont de ladite partie terminale (19).

6. Drain suivant l'une des revendications 1 à 5, **caractérisé en ce que** la largeur (22) de chaque ouverture de drainage (12) est de l'ordre de 10 à 20 mm.

7. Drain suivant l'une des revendications 1 à 6, **caractérisé en ce que** le rapport entre la longueur (L) de ladite section générale (15) du conduit de drain (10) prise dans un plan parallèle audit bord de fuite (6), et la largeur (l) est dans la plage 1-10.

8. Drain suivant l'une des revendications 1 à 7, **caractérisé en ce que** chaque ouverture (12) est définie, dans le sens de la largeur (22), entre un bord de l'un des flancs (11a, 11b) et un bord (25) d'une partie (24) de ladite partie terminale à section en ogive (19), ladite partie (24) étant dirigée vers l'intérieur du drain (10) en sorte de définir un plan de reprise du flux (E) d'écoulement aérodynamique le long dudit flanc (11a, 11b).

9. Drain suivant la revendication 8, **caractérisé en ce que** ladite partie rentrante (24) forme avec la tangente à la partie adjacente (26) de ladite partie terminale (19) un angle de l'ordre de 30°.

## Claims

1. A drain, in particular for an aircraft engine support strut (3), arranged on the trailing edge (6) of the rear secondary structure (3) of said strut, **characterised in that** it comprises:
- a conduit (10) with a substantially horizontal axis,
- with a substantially rectangular overall cross-section (15), taken in a plane parallel to the trailing edge (6),
- closed at its external end by an end part (19) with a substantially ogival cross-section taken in the axis of the conduit,
- and comprising at least one drainage opening (12) with an elongate shape on at least one of the opposite lateral walls (11a, 11b).

2. A drain according to claim 1, **characterised in that** said conduit (10) is symmetrical with respect to the vertical plane containing said trailing edge (6).

3. A drain according to claim 1 or 2, **characterised in that** said conduit (10) comprises, on its two opposite lateral walls (11a, 11b), two drainage openings (12), elongate in shape, the major axe (13) of which is parallel to the trailing edge (6).

4. A drain according to claim 3, **characterised in that** said drainage openings (12) are symmetrical.

5. A drain according to one of claims 1 to 4, **characterised in that** said drainage openings (12) are disposed substantially level with the trailing edge (6) of the rear secondary structure (3), upstream of said end part (19).

6. A drain according to one of claims 1 to 5, **characterised in that** the width (22) of each drainage opening (12) is around 10 to 20 mm.

7. A drain according to one of claims 1 to 6, **characterised in that** the ratio between the length (L) of said overall section (15) of the drain conduit (10) taken in a plane parallel to said trailing edge (6) and the width (1) is in the range 1-10.

8. A drain according to one of claims 1 to 7, **characterised in that** each opening (12) is defined, in the direction of the width (22), between an edge of one of the flanks (11a, 11b) and an edge (25) of a part (24) of said end part with an ogival cross-section (19), said part (24) being directed towards the inside of the drain (10) so as to define a plane for taking up the aerodynamic flow (E) along said flank (11a, 11b).

9. A drain according to claim 8, **characterised in that** said re-entrant part (24) forms an angle of around 30° with the tangent to the adjacent part (26) of said end part (19).

## Patentansprüche

1. Ablaufkanal insbesondere für die Tragstrebe (3) von Flugzeugstrahltriebwerken, der an der Hinterkante (6) der hinteren sekundären Struktur (3) der Strebe angeordnet ist, **dadurch gekennzeichnet ist, dass** er gebildet ist aus:
- einem Kanal (10) mit im Wesentlichen horizontaler Achse und
- mit im Wesentlichen rechtwinkligem allgemeinem Querschnitt (15) in einer zu der Hinterkante (6) parallelen Ebene,
- der an ihrem äußeren Ende durch ein Abschlussteil (19) mit im Wesentlichen spitzbogenförmigem Querschnitt längs der Achse der Leitung verschlossen ist,
- und wenigstens eine Entleerungsöffnung (12) mit lang gestreckter Form an wenigstens einer der gegenüberliegenden Seitenwände (11a, 11b) aufweist.

2. Ablaufkanal nach Anspruch 1, **dadurch gekennzeichnet, dass** die Leitung (10) in Bezug auf die vertikale Ebene, die die Hinterkante (6) enthält, symmetrisch ist.

3. Ablaufkanal nach Anspruch 1 oder 2, **dadurch gekennzeichnet, dass** der Kanal (10) an seinen zwei gegenüberliegenden seitlichen Wänden (11a, 11b) zwei Ablauföffnungen (12) mit lang gestreckter Form aufweist, deren große Achse (13) zur Hinterkante (6) parallel ist.

4. Ablaufkanal nach Anspruch 3, **dadurch gekennzeichnet, dass** die Entleerungsöffnungen (12) symmetrisch sind.

5. Ablaufkanal nach einem der Ansprüche 1 bis 4, **dadurch gekennzeichnet, dass** die Ablauföffnungen (12) im Wesentlichen auf Höhe der Hinterkante (6) der hinteren sekundären Struktur (3) stromaufseitig von dem Stromabschlussteil (19) angeordnet sind.

6. Ablaufkanal nach einem der Ansprüche 1 bis 5, **dadurch gekennzeichnet, dass** die Breite (22) jeder Ablauföffnung (12) in der Größenordnung von 10 bis 20 mm liegt.

7. Ablaufkanal nach einem der Ansprüche 1 bis 6, **dadurch gekennzeichnet, dass** das Verhältnis zwischen der Länge (L) des allgemeinen Querschnitts (15) der Leitung des Ablaufkanals (10) in einer zu der Hinterkante (6) parallelen Ebene und der Breite (I) im Bereich von 1-10 liegt.

8. Ablaufkanal nach einem der Ansprüche 1 bis 7, **dadurch gekennzeichnet, dass** jede Öffnung (12) in Richtung der Breite (22) zwischen einem Rand einer der Seitenflächen (11a, 11b) und einem Rand (25) eines Teils (24) des Abschlussteils mit spitzkegeligem Querschnitt (19) definiert ist, wobei der Teil (24) in das Innere des Ablaufkanals (10) gerichtet ist, derart, dass eine Ebene (E) für die Aufnahme der aerodynamischen Strömung längs der Seitenfläche (11a, 11b) definiert ist.

9. Ablaufkanal nach Anspruch 8, **dadurch gekennzeichnet, dass** der zurücklaufende Teil (24) mit der Tangente an dem benachbarten Teil (26) des Abschlussteils (19) einen Winkel in der Größenordnung von 30° bildet.
